# EUROPEAN PATENT APPLICATION

(11) **EP 1 793 382 A1**
(43) Date of publication of application: **06.06.2007**
(21) Application number: 05111594.7
(22) Date of filing: 01.12.2005
(51) Int. Cl.: G11B 27/32, G11B 20/12

(54) **Hybrid format storage medium, and method and apparatus for reading a hybrid format storage medium**

(71) Applicant: DEUTSCHE THOMSON-BRANDT GMBH, 78048 Villingen-Schwenningen (DE)
(72) Inventor: Li, Hui, 30539 Hannover (DE); Blawat, Meinolf, 30659 Hannover (DE); Hepper, Dietmar, 30419 Hannover (DE)
(74) Representative: Rittner, Karsten

(57) **Abstract**

It would be desirable to play contents from an AV archive independent from the source format, e.g. video discs, game discs, DVDs etc. in a single player. When conventionally integrating content from different format media to a single high-capacity storage medium by copying, the content cannot be played directly from the target medium. A method for writing data on a high-capacity disc comprises wrapping AV data sets of arbitrary format coming from arbitrary source media into images, generating a sub-disc information file (36) indicating for each image required AV playback information (35), and storing the images and the sub-disc information file on a single disc (34). A respective player can playback the AV contents by automatically reading from the physical disc the sub-disc information file (36), extracting a list of image files and for each image file playback information and automatically setting up one virtual player for each of the image files according to said playback information.

## Description

### Field of the invention

This invention relates to a hybrid format storage medium, and to a method and apparatus for reading a hybrid format storage medium.

### Background

The storage capacity of optical discs increased steadily, from CD via DVD to blue-laser discs. Further formats with even higher capacities can be expected. Usually a DVD can contain contents of several CDs, a blue-laser disc can contain contents of several DVDs and additional CDs. There is no problem for just using larger capacity optical discs as data storage for contents from multiple optical discs of lower storage capacity. But many application contents in optical discs can only be played or applied directly from their original optical discs running in associated optical devices, such as content in Video-CD (VCD), DVD-Video, Game CD and some software CDs.

Although it is possible to copy the whole data from a low capacity optical disc to a large capacity optical disc, the copied content cannot be fully played directly from the large capacity optical disc. E.g. content of Video-CDs may be copied to a recordable or rewriteable DVD. But the VCD content saved in a DVD cannot be played like that playing directly from VCD, because the DVD player will reject the VCD format. For playing the VCD content from DVD, tricks can be used: either playing the audio/video (AV) data directly with a computer media player, or using associated DVD author tools to pack the VCDs AV content to DVD-Video format. In both cases however, the original metadata such as menu messages or navigation data are lost.

More and more users would like to use their mobile devices, such as mobile phones or PDAs, to play preferred contents from their optical disc archive, containing e.g. video discs, game discs and other application discs. In principle, users could integrate content from low-storage discs (VCD, game-CD) to a small-size high-capacity storage medium suitable for usage in mobile devices by copying. But when simply copying data from a different media format, the content can usually not be played directly from the target medium. Particularly mobile devices are built with only light-weighted performance. Therefore it is difficult for small mobile devices to do further format conversion for playing contents e.g. from an integrated optical disc.

Computer operating systems allow multiple applications to execute simultaneously. To share physical resources amongst them, dynamically loadable virtual device drivers (VDD) managed by the operating system are used. A virtual device driver is a software component that enables direct communication between an application and a hardware device, and organizes the flow of data to allow more than one application to access the same physical resource without conflict. Based on the VDD technology, there exist virtual optical storage tools that can create virtual optical devices in a computer system. A user may generate a virtual image from optical disc media and play the virtual image data directly from the associated virtual optical device. The virtual image appears to the computer as actual media, e.g. CDs or DVDs. Virtual optical storage technology enables the user to save virtual image data of optical disc media in a hard disc drive (HDD), and play the image data directly from HDD using a virtual optical device.

### Summary of the Invention

When applying the current virtual optical storage tools, the computer system is heavily loaded. Usually virtual images must be stored in a local HDD. This is unsuitable for data distribution and archiving, and for usage in mobile devices with only light-performance.

Therefore a problem to be solved by the invention is to provide a method for integrating AV data from a plurality of potentially different source media into a single removable target medium, wherein the AV data may have different formats and preferably a format conversion is neither for storing nor for playback of the AV data required. Further, a problem to be solved by the invention is to provide a method for playing back such integrated AV data from a medium.

The present invention provides a "disc in disc" solution.

In principle, a method for writing data on a high-capacity storage medium comprises wrapping AV data sets of arbitrary format coming from arbitrary source media into images, generating a sub-disc information file indicating for each image at least required AV playback information, and storing the images and the sub-disc information file on a single disc.

A respective player can playback the AV contents by automatically detecting and reading from the physical disc the sub-disc information file, extracting from the sub-disc information file a list of image files and for each image file playback information and automatically setting up one virtual player for each of the image files according to said playback information.

According to one aspect of the invention, writing data on a hybrid format storage medium comprises wrapping one or more AV data sets of arbitrary format coming from arbitrary source media into a wrapper format, generating a sub-disc information file indicating for each wrapped AV data set at least required playback information, and storing the wrapped AV data sets and the sub-disc information file on a single storage medium. The invention is particularly advantageous for "portable" or removable storage media that are made for usage independent from a particular player and that appear as a single medium, such as optical discs.

According to another aspect of the invention, a storage medium contains at least data for one or more images being wrapped AV data sets and a sub-disc information file indicating for each wrapped AV data set at least playback information required after unwrapping the respective image. The sub-disc information file has a predefined name and/or storage location within the storage medium, and its entries refer to the images preferably via file name.

According to a further aspect of the invention, a method for accessing and/or playing back AV contents from a removable storage medium comprises detecting insertion of a physical storage medium, automatically reading from the physical storage medium an image information file, extracting from the image information file a list of one or more image files and for each image file on the list playback information, wherein the image files contain wrapped AV data, automatically setting up one virtual player for each of the image files according to said playback information, reading and unwrapping the AV data of the image corresponding to a user selection and playing back the unwrapped AV data.

Further steps of this aspect of the invention may comprise displaying a menu showing items for at least a part of the virtual players, and detecting user selection of one of the virtual players.

A further step of this aspect of the invention may be to determine the type of storage medium, e.g. by reading a storage type identifier or by checking if an image information file with predefined name and/or predefined storage location is present on the medium.

The AV data may be eg. entertainment data such as music or movies and/or application data such as games and software.

Advantageous embodiments of the invention are disclosed in the dependent claims, the following description and the figures.

### Brief description of the drawings

Exemplary embodiments of the invention are described with reference to the accompanying drawings, which show in
Fig.1 the basic work procedure of virtual optical storage;
Fig.2 the generation of a disc-in-disc medium;
Fig.3 playback of a disc-in-disc medium; and
Fig.4 an exemplary GUI of a player device.

### Detailed description of the invention

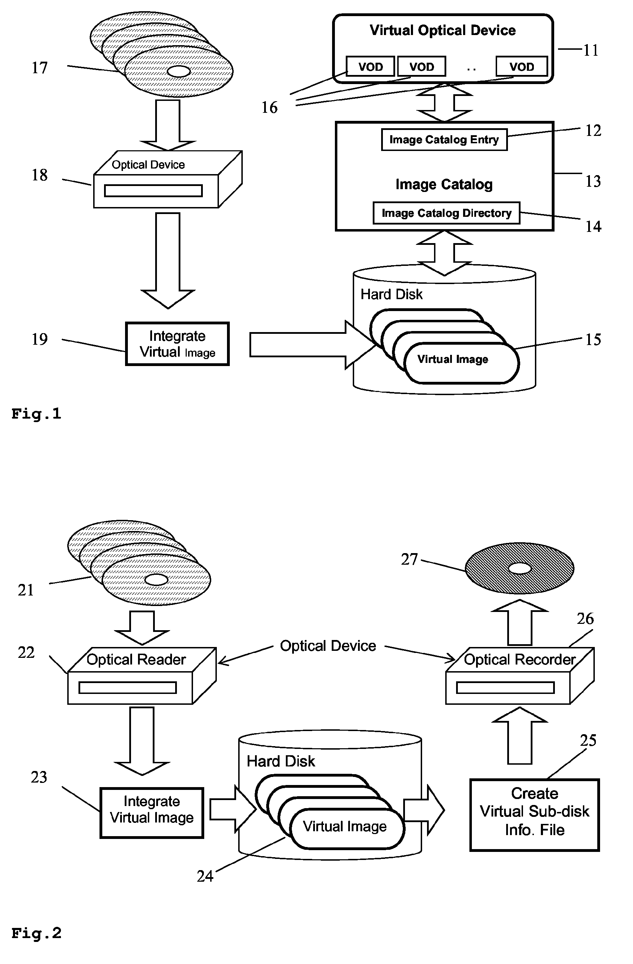

The conventional basic work procedure of virtual optical storage is shown in Fig.1. A virtual optical storage system consists mainly of three parts: a virtual optical device (VOD) 16 defined by a VOD platform 11, a virtual image 15 and an image catalogue 13. A VOD platform 11 is a device description that supports virtual optical storage, like an actual optical device description supports actual, physical optical storage. After installation of such VOD platform 11, multiple virtual optical devices 16 can be defined based on the platform.

A virtual image 15 is a stream file object that contains a copy of the data from the physical optical disc 17, such as CD or DVD. These data of physical optical discs 17 are read by the physical optical device 18. A conversion application 19 integrates the data from the physical optical disc into a stream file of the virtual image 15. A virtual image 15 resides usually in a local hard disc.

An image catalogue 13 is a software object being a kind of database for fast access to the virtual images 15, with entries 12 that are references to these images 15. The image objects are addressed by identifiers, eg. UUIDs. The actual virtual image data are not stored in the image catalogue. Each image catalogue 13 is associated with one integrated image catalogue directory 14. An image catalogue entry 12 is a position within an image catalogue 13 that contains information about a virtual image that is located in the image catalogue directory 14. By operations like "Mounted", "Loaded" or "Unloaded", the image catalogue entry 12 can emulate to "insert" or "eject" a virtual image 15 to or from the VOD 16.

In the described virtual optical storage application, the computer system is heavily loaded. All virtual optical storage objects 13,16 are installed locally. Large storage such as HDD is required for storing virtual images 15. This is unsuitable for light-performance mobile devices.

The present invention provides a "disc-in-disc" solution. In general, this comprises two aspects: disc generation and disc playback. In the following, these are described in more detail.

The basic idea for recording is shown in Fig.2. Data of optical discs 21 belonging to different applications are integrated 23 as virtual images 24. A sub-disc information file containing entries and directory messages describing the virtual images 24 is created 25. Sub-disc information file and the integrated application data are stored in a high-capacity storage medium, e.g. a high-capacity optical disc 27, using an appropriate recorder device 26.

For generating a disc according to the invention, the data of actual optical discs (CD, DVD) 21 are read by an actual optical reader device 22. A converting application 23 integrates the data of each optical disc into individual virtual images 24 being separate files. This may include e.g. packing the data into a virtual image file. Each virtual image 24 contains the file system of the corresponding source disc 21. Based on these virtual image files, an associated virtual sub-disc information file is created 25, similar to a conventional image catalogue. A difference however is that the conventional image catalogue is generated and stored within each player, e.g. on a HDD, while the sub-disc information file and all associated virtual images 24 are written to a high-capacity storage medium such as a carrier optical disc 27, using an actual optical disc recorder 26. Thus, the virtual sub-disc information file and the corresponding virtual images 24 are directly connected. The sub-disc information file has a predefined name and/or storage location on the medium.

A further difference is that the sub-disc information file contains virtual image directory information, which may automatically generate image entry messages for associated virtual optical devices. Based on the sub-disc information, all virtual image files can be shown automatically as "inserted" to their associated virtual optical devices. No image catalogue as in conventional virtual devices is needed for loading and unloading images to virtual devices. This makes the virtual device easier to use.

Compared with the original media 21, the carrier optical disc 27 will usually have very large storage capacity, such as a HD-DVD or Blu-ray disc when compared with CD or DVD. It has preferably enough capacity to record data coming from multiple actual optical discs 21. The optical reader 22 and the optical recorder 26 can be one single optical device.

The image information file or sub-disc information file is automatically read after insertion of the physical medium in a player, and all available image files are shown as virtual devices with their respective medium inserted. When the physical medium is ejected, all the virtual media are also ejected, and the virtual players may be terminated.

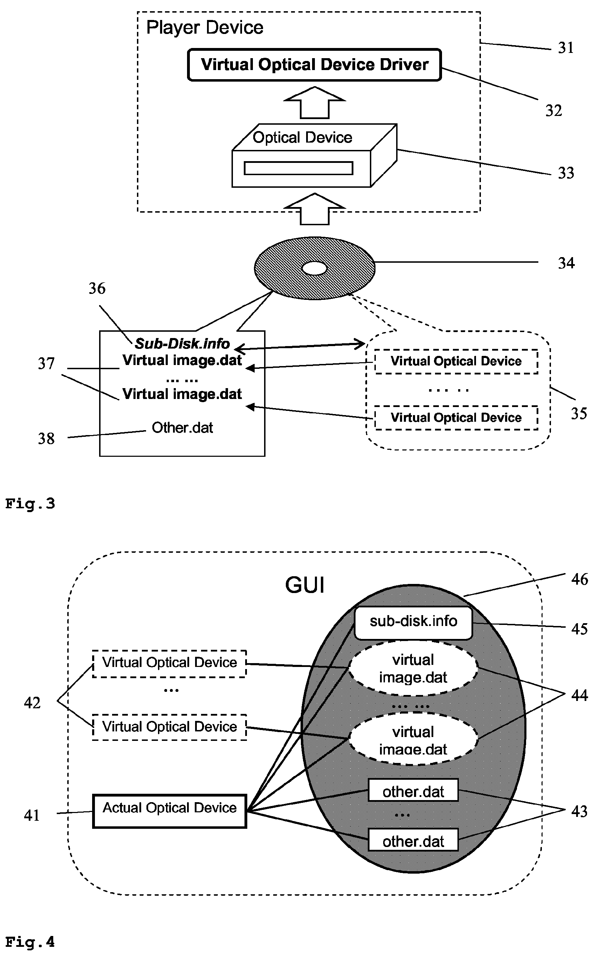

Fig.3 shows the principle of playback according to the invention. A player device 31 such as e.g. a computer or a mobile device reads and detects the medium 34 according to the invention using an actual optical device 33, which can physically read the natural data of the disk 34. For setup of a virtual optical device and direct playback of sub-disk content from the carrier medium 34, the player device 31 is installed with a virtual optical device driver 32 that can read the sub-disk information file 36. Based on the predefined sub-disk information 36 of the carrier disk 34, the virtual optical device driver 32 can generate virtual optical devices 35 in the system of the player device 31, which are pre-loaded with the corresponding image data.

After inserting the carrier optical disk 34 into the actual optical device 33, the actual optical device 33 can read the physical data. Under control of the virtual optical device driver 32, the player device 31 detects that there is a sub-disk information file 36 available and reads the sub-disk information file 36 from the physical disk 34. The sub-disk information file 36 contains e.g. the directories of all virtual images 37 recorded in the current carrier optical disk 34. In one embodiment, the sub-disk information file 36 contains the directories, names and playback/format information of a plurality of (but not necessarily all) the virtual images 37 recorded on the current carrier optical disk 34. The sub-disk information file 36 assigns image catalogue entries to each virtual image 37. According to the invention, it is predefined here that each entry pointing to one virtual image 37 will be shown to the system of the player device 31 as one virtual optical device 35. The number of virtual optical devices 35 is identical to the number of virtual images 37 on the optical disc 34.

Similar to the image catalogue 13 described in Fig.1, the sub-disc information file 36 contains directory information for all virtual images 37 recorded in the current carrier optical disc 34. The sub-disc information file 36 assigns an image catalogue entry to each virtual image 37. However, it is predefined here that each entry pointing to one virtual image 37 will be shown to the system of the player device 31 as a separate virtual optical device 35.

In one embodiment of the invention the actual player device has a virtual device driver (VDD) software available, e.g. stored on a small HDD, non-volatile memory or similar. In another embodiment however, the actual player device has only very limited, basic device driver software available, with which it may automatically read the VDD software from the inserted physical medium before installing the virtual device and showing the menu in a GUI.

Fig.4 shows an exemplary graphical user interface (GUI) of the player device. From the GUI, the user may see an actual optical device 41 and multiple virtual optical devices 42.

Each of the virtual optical devices 42 behaves (from the user's point of view) like a conventional actual optical device that is pre-loaded with a virtual image 44; however it can only access, browse and play the contents of its associated virtual image. Virtual images appear to the player device to be actual optical disc media. The player communicates with the virtual player like with a physical player, usually through a device driver. E.g. a virtual image acts like a CD, another one like a DVD. This information is included in the sub-disc information file 45.

The actual optical device 41 can browse all data in the inserted optical disc 46, which includes the sub-disc information file 45, virtual image data 44 and other data 43. The virtual image data can be played by respectively associated virtual optical devices, and the "other" data 43 can be browsed and handled only by the actual optical device, as usual.

As shown in Fig.4, after inserting an optical disc 46 in the GUI of the player device according to the invention, an actual optical device 41 and multiple virtual optical devices 42 are shown to the user. An actual optical disc 46 is loaded in the actual optical device 41. The virtual optical discs 44 are loaded in their corresponding virtual optical devices 42. Virtual optical discs 44 seem to be virtual sub-discs carried by an actual optical disc 46, so we call it "disc-in-disc". Thus, the high-capacity storage medium 46 acts as a hybrid storage carrier. All kinds of application data can be stored together, without being looked into, and data for each application can be read (as an image file) and used as if it were on its independent original optical disc.

In the actual optical device 41, one actual optical disc 46 is mounted. All existing physical data 43,44,45 in the actual optical disc 46 can be seen and accessed by the actual optical device 41.

All virtual optical devices 42 are loaded with associated virtual images, which are defined by the sub-disk.info files 45. In a virtual optical device 42, a virtual image 44 is browsed as "expanded" data of its origin. For the GUI, each virtual optical device 44 acts and appears like an actual optical device. Each virtual image 44 in a virtual optical device 42 acts and appears like an actual optical disc. Each virtual optical device 42 can browse and play its corresponding virtual image 44 only.

Only the actual optical device 41 can browse and apply these non-virtual image data 43 as usual. The actual optical device 41 can only browse the virtual images 44 as physical data, but it cannot "expand" virtual images. If the user tries to "expand" or "play" a virtual image 44, e.g. through selecting a virtual image in a GUI, this action is forwarded automatically to the associated virtual optical device 42, which was created in one embodiment of the invention upon detection of the respective virtual image after insertion of the physical disc. In another embodiment, the associated virtual optical device is created after the user selected the virtual image 44. The latter has the advantages that less memory is required and that the initial setup time after disc insertion is shorter. However, more time is required after selection of an image, because the virtual player needs to be set up. Then the associated virtual optical device 42 will be opened, and its associated virtual image 44 will be "expanded", browsed and played in its corresponding virtual optical device 42.

After ejecting the actual optical disc 46, all virtual optical devices 42 disappear automatically. The actual optical device is unloaded. Thus, virtual devices according to the invention always appear loaded, and each virtual device may only load a particular virtual disc. Though a virtual device that appears in the GUI can have virtual buttons such as "play", "fast forward" or "rewind", it is e.g. not necessary for such virtual device to have an "eject" button. In one embodiment of the invention however, a virtual player has a button that may e.g. look like an "eject" button, wherein operating this button will terminate the respective virtual player.

An advantage of the present invention is that it allows archiving AV content from multiple optical discs that have different formats and applications within a single high-capacity optical disc, and play back stored content just as if it was read from its original optical disc.

Moreover, content protection systems (CPS) that depend on the logical disc and are independent from the physical disc remain working. E.g. disc IDs of source discs can be included in the virtual image of a disc or associated to the virtual image, e.g. as metadata, so that CPSs based on disc IDs remain operative for the virtual image of a disc.

Thus, the invention enables storing and applying hybrid contents in a single optical disc, or a generally a hybrid format storage medium.

Advantageously, intermediate copying the AV data from the target medium to local storage for format conversion is not necessary.

As a further advantage, metadata can be packed together with their essence into the virtual image file, or can be associated to the virtual image file. The invention provides a way to use these metadata as intended.

Further, the invention is suitable not only for archiving but also for distributing content, e.g. in a distributed storage system.

As another advantage, the present invention is suitable for implementing multiple optical disc applications in "light-weighted", simple mobile devices, since such devices need only one physical player according to the invention in order to read any logical disc format.

Moreover, physical disc players may simply be upgraded by adding new virtual drivers. The upgraded physical player may therefore create virtual players that did not exist at production time of the physical player.

The invention promotes usage of high-capacity optical discs for creating integrated private safe copies, by storing and applying content of lower-capacity optical discs that may even be protected with copy protection.

Conventionally, in many cases optical disc content can not be copied through "drag and drop" because of CPSs. For generating a private copy disc, special copy tools can be used to read disc data into an "image", which is then used to create a "clone" copy disc, which does not differ from the original. Conventionally it is impossible to extract content fully or partially from such protected disc, accumulate it into e.g. a high-capacity optical disc, and play the content directly from the high-capacity disc. The invention enables the generation of such copy, wherein the content protection mechanism may remain untouched. Thus the user has more freedom in using the content independent from the medium itself.

Another application is a distributed storage system, where application data from optical discs may be distributed to other users or archives based on optical discs. Users may accumulate data from multiple low-capacity optical discs to a large-capacity optical disc. When using a large-capacity optical disc, a user may want to store different kinds of application contents on a single disc. E.g. users may store data of several Video-CDs, game-CDs or application software CDs into a DVD. While with a conventional "drag and drop" copy it is impossible for users to play accumulated contents directly from the large-capacity disc instead of contents from their original discs, the invention enables such direct playing.

Conventionally it would be necessary to convert different kinds of application contents into a unified format within the large-capacity optical disc. The invention however provides a way to skip that need for conversion.

The invention can be used for implementing unified format storage media instead of multiple format-dependent versions of such media. E.g. an optical disc with a first physical format using a first logical data structure and a second optical disc with a second physical format using a second logical data structure are usually incompatible. Using the invention, data from the first and the second optical discs can be stored as images on an optical disc with the first, the second or a different third physical format and data structure, and played back without format conversion.

## Claims

1. A method for writing data on a removable storage medium comprising the step of
- wrapping one or more AV data sets of arbitrary format coming from arbitrary source media into a stream format;
- generating a sub-disc information file indicating for each wrapped AV data set at least required AV playback information comprising an indication of the format and/or type of the respective source medium; and
- storing the wrapped AV data sets and the sub-disc information file on a single storage medium.

2. Storage medium containing at least
- data for one or more images being wrapped AV data sets, wherein the AV data sets if unwrapped have arbitrary formats; and
- an image information file indicating for each wrapped AV data set at least playback information indicating the respective format for usage after unwrapping the respective image.

3. Storage medium according to the previous claim, wherein the image information file has a predefined name and/or storage location within the storage medium.

4. Method for playing back AV contents from a removable storage medium comprising the steps of
- detecting insertion of a physical storage medium;
- automatically reading from the physical storage medium an image information file;
- extracting from the image information file a list of one or more image files and for each image file on the list playback information, wherein the image files contain wrapped AV data;
- automatically setting up one virtual player for each of the image files according to said playback information; and
- reading and unwrapping the AV data of the image corresponding according to a user selection.

5. Method according to the previous claim, further comprising the step of detecting that an image information file is stored on the storage medium, wherein the image information file has a predefined name and/or storage location on the medium.

6. Method according to claim 4 or 5, wherein each image file corresponds to a virtual storage medium, further comprising the step of generating a menu that shows an item per virtual storage medium, but no item for said removable physical storage medium.

7. An apparatus for writing data on a removable storage medium comprising
- means for wrapping one or more AV data sets of arbitrary format coming from arbitrary source media into a stream format;
- means for generating a sub-disc information file indicating for each wrapped AV data set at least required AV playback information; and
- means for storing the wrapped AV data sets and the sub-disc information file on a single storage medium.

8. An apparatus for playing back AV contents from a removable storage medium comprising
- means for detecting insertion of a physical storage medium;
- means for automatically reading from the physical storage medium an image information file;
- means for extracting from the image information file a list of one or more image files and for each image file on the list playback information, wherein the image files contain wrapped AV data;
- means for automatically setting up one virtual player for each of the image files according to said playback information; and
- means for reading and unwrapping the AV data of the image corresponding according to a user selection.

9. Apparatus according to the previous claim, further comprising means for playing back the unwrapped AV data.

10. Apparatus according to claim 8 or 9, wherein each image file corresponds to a virtual storage medium, further comprising means for generating a menu that shows an item per virtual storage medium, but no item for said removable physical storage medium.
